# EUROPEAN PATENT SPECIFICATION

(11) **EP 2 509 030 B1**
(45) Date of publication and mention of the grant of the patent: **17.06.2020**
(21) Application number: 12163238.4
(22) Date of filing: 04.04.2012
(51) Int. Cl.: G03G 15/00, G06K 15/00

(54) **Image forming apparatus, and control method thereof**
Bilderzeugungsvorrichtung und Steuerverfahren dafür
Appareil de formation d'images et son procédé de commande

(30) Priority: 06.04.2011 JP 2011084812
(43) Date of publication of application: 10.10.2012
(73) Proprietor: Canon Kabushiki Kaisha, Tokyo 146-8501 (JP)
(72) Inventor: Yamasaki, Shozo, Ohta-ku Tokyo 146-8501 (JP)
(74) Representative: Hitching, Peter Matthew

(56) References cited:
- US-A1- 2009 077 399

## Description

### BACKGROUND OF THE INVENTION

### Field of the Invention

The present invention relates to an image forming apparatus, and a control method thereof.

### Description of the Related Art

Conventionally, a technology has been proposed for image forming apparatuses that communicate with an external terminal via a network interface (I/F) such that, when the image forming apparatus shifts to a power saving mode, transmission and receipt of data can be achieved through the network interface (I/F).

Japanese Patent Application Laid-Open No. 2005-094679 discusses an image processing apparatus including a main Central Processing Unit (CPU) that controls a controller of the main body of the apparatus, and a sub CPU that controls a network I/F to achieve transmission and receipt of data. The image processing apparatus in the power saving mode stops power supply to units therein except a circuit that is necessary to control the sub CPU. The image processing apparatus is controlled by the sub CPU when returning from the power saving mode. In the power saving mode, the sub CPU communicates with an external terminal via a network.

The image forming apparatus according to Japanese Patent Application Laid-Open No. 2005-094679, in the power saving mode, stops power supply to many units including the main CPU. Thus, reduction in power consumption in the image processing apparatus can be achieved while communication between the image forming apparatus and a network is enabled.

The image processing apparatus according to Japanese Patent Application Laid-Open No. 2005-094679, however, requires a control circuit such as a sub CPU exclusively used to enable communication with a network in the power saving mode. In a case where the control circuit is installed in the image processing apparatus in addition to the power supply for the main CPU, a different power supply is required. Furthermore, a special circuit to drive the sub CPU is needed to control the power saving mode. These factors lead to cost increase.

Thus, it is difficult to provide such a special circuit needed to control the power saving mode causes troubles in consumer products that are severely required to reduce manufacturing cost.

However, it is difficult to achieve considerable power saving in an image processing apparatus without the special circuit for network communication. As a result, in consumer products, when suppressing power consumption during the power saving mode both of power saving and cost reduction have to be achieved.

Meanwhile, energy conservation is in demand among users. In addition, to comply with the electricity regulation such as Energy-related Products (ErP) Directive Lot6 that will be effective in 2013, image forming apparatuses that communicate with a networks, are required to achieve as consumer products significant power saving. The ErP Directive requires every product relating to energy to be designed to mitigate environmental impacts. The Lot6 defines the limits of power consumption in a sleep mode and an off mode respectively.

US 2009/0077399 describes an image forming apparatus having an operational mode, stand-by-mode, low-power mode, and sleep mode. When no data is submitted to the image-forming apparatus during a first time period the image-forming apparatus enters the low-power mode from the stand-by mode. When no data is submitted for a longer second period to the image-forming apparatus, the image-forming apparatus enters a sleep mode in which power supply to all functional parts is stopped.

### SUMMARY OF THE INVENTION

The present invention is directed to providing an image forming apparatus with a simple mechanism that avoids cost increase and achieves significant reduction in power consumption, while keeping the convenience of the image forming apparatus for users who use a network I/F for communication with an external terminal such as a network and a USB.

The present invention in its first aspect provides an image forming apparatus as specified in claims 1 to 8.

Further features of the present invention will become apparent from the following description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.
Fig. 1 is a block diagram illustrating a structure of an image forming apparatus according to an exemplary embodiment of the present invention.
Fig. 2 is a block diagram illustrating a structure of a control unit.
Fig. 3 is a block diagram illustrating a power source unit, a central processing unit (CPU) in a control unit, and a CPU in an operation panel, and control signals transmitted therethrough.
Fig. 4 is a plan view of an operation panel.
Fig. 5 is a flowchart illustrating an example of power control in an image forming apparatus by a CPU in a control unit, from a normal mode to a power saving mode A or a power saving mode B as a power consumption state.
Fig. 6 is a flowchart illustrating an example of power control by a CPU in an operation panel.
Fig. 7 is a flowchart illustrating an example of a process performed by a CPU in step S508 in Fig. 5 to detect a communication state of a network I/F.
Fig. 8 illustrates a power state of an image forming apparatus.
Fig. 9 illustrates an example of a power saving mode selection screen according to a second exemplary embodiment.
Fig. 10 is a flowchart illustrating an example of a process performed in step S508 in Fig. 5 by a CPU of a control unit according to the second exemplary embodiment.
Fig. 11 is a block diagram illustrating control signals transmitted between a CPU in an operation panel and a CPU in a control unit.

### DESCRIPTION OF THE EMBODIMENTS

Various exemplary embodiments, features, and aspects of the invention will be described in detail below with reference to the drawings.

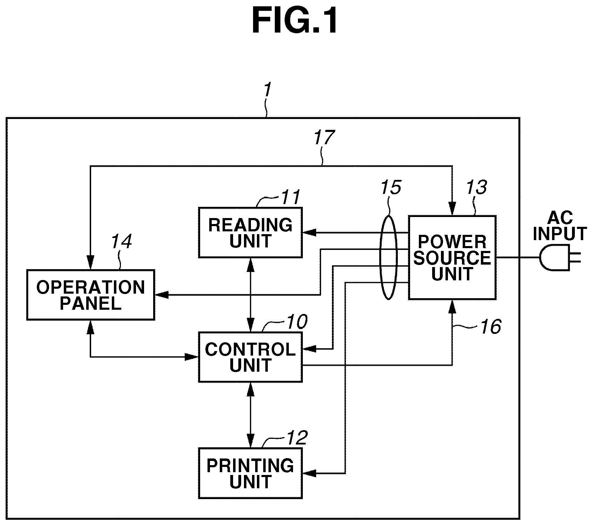

A first exemplary embodiment is described. As illustrated in Fig. 1, an image forming apparatus 1 includes a printing unit 12, a reading unit 11, an operation panel 14, a power source unit 13, and a control unit 10 controlling the above components.

The control unit 10 receives image data from the reading unit 11, a host computer as an external apparatus, or a facsimile apparatus connected to the control unit 10 via public switched telephone network (PSTN) line (i.e., public line). Based on the image data, the control unit 10 performs image processing. For example, the printing unit 12 forms an image of the processed data on a sheet.

The reading unit 11 reads a document as image data, and transmits the read image to the control unit 10. The reading unit 11 includes a scanner unit and a sheet feeding unit (neither illustrated). The sheet feeding unit has a function to convey document sheets placed on a document feeder to the scanner unit. The scanner unit has a function to read the images on document sheets conveyed from the sheet feeding unit.

The printing unit 12 conveys recording sheets, prints the image data received from the control unit 10 by an electrophotographic method and the like onto the recording sheets as visible images, and discharges the sheets from the apparatus 1. The printing unit 12 includes a sheet feeding unit, a marking unit, and a sheet discharge unit (not illustrated) . The sheet feeding unit includes cassettes for a plurality of types of recording sheets, and has a function to convey sheets from one of the recording sheet cassettes to the marking unit. The marking unit transfers and fixes the image data onto recording sheets fed from the sheet feeding unit. The sheet discharge unit has a function to sort, staple, and discharge the recording sheets having images printed by the marking unit, from the apparatus 1.

The operation panel 14 is used to input various settings in forming images using the printing unit 12 from document data read by the reading unit 11, based on instructions from an operator (i.e., a user). The operation panel 14 is a user interface with touch panels, for example. The operation panel 14 has a function to receive a number of images to be formed, information about color density when an image is formed, a selection of a resolution for the scanner unit to read an image (e.g., 300 dpi and 600 dpi).

The power source unit 13 is a power source circuit to which power is input from an alternating-current commercial power source (AC power source). The power source unit 13 generates a voltage 15, which is fed as a direct current voltage or alternating current voltage to the control unit 10, the reading unit 11, the printing unit 12, and the operation panel 14. The power source unit 13 changes the voltage 15 in response to a control signal 16 from the control unit 10 or a control signal 17 from the operation panel 14.

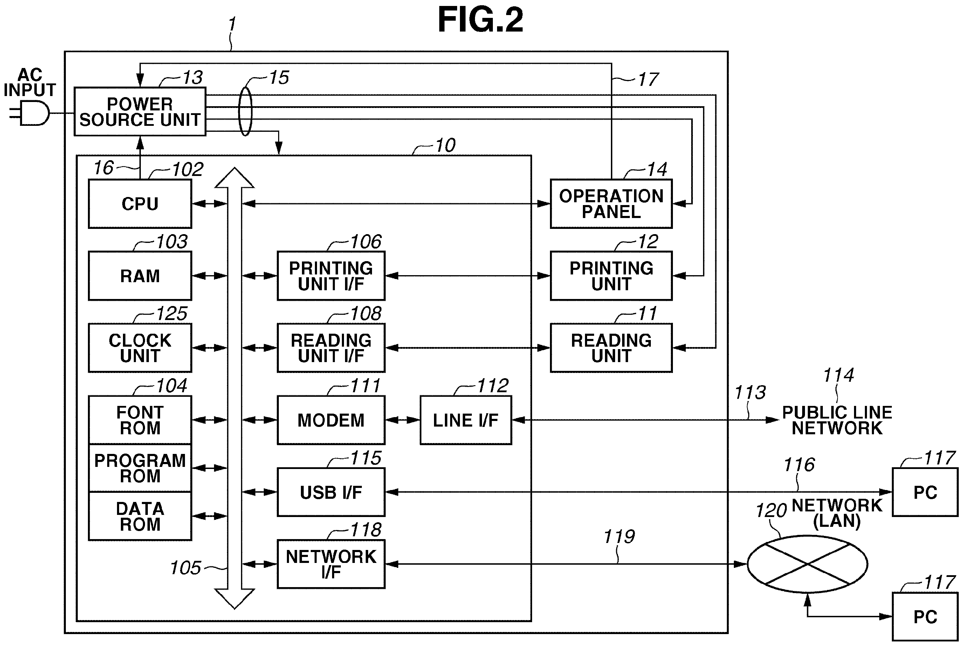

As illustrated in Fig. 2, the control unit 10 includes a CPU 102, a random access memory (RAM) 103, a clock unit 125, a read only memory (ROM) 104, a printing unit I/F 106, a reading unit I/F 108, a MOdulator-DEModulator (MODEM) 111, a line I/F 112, a Universal Serial Bus (USB) I/F 115, and a network I/F 118. These blocks are mutually connected via a system bus 105.

The CPU 102 comprehensively controls these blocks according to various control programs. The control programs are stored in a program area of the ROM 104 (program ROM) in a computer-readable manner, and is read and executed by the CPU 102. Alternatively, data stored and compressed into a program area of the ROM 104 is decompressed and loaded into the RAM 103 to be executed by the CPU 102. The control programs may be stored in a hard disk drive (HDD) (not illustrated) in a compressed or decompressed state.

The network interface (network I/F) 118 communicates with a host computer 117 (which is represented by PC in Fig. 2, hereinafter referred to as PC) via a network (e.g., local area network (LAN)) 120. The network I/F 118 is connected to the network 120 via a communication cable such as a LAN cable 119.

The MODEM 111 is connected to a public line network 114 via the line I/F 112 to communicate with another image forming apparatus, a facsimile apparatus, and a telephone (not illustrated) . The line I/F 112 is connected to the public line network 114 usually using a telephone line 113.

The USB interface (I/F) 115 is used to connect a computer to a peripheral device. The printing unit I/F 106 is used to output image signals to the printing unit 12 (printer engine). The reading unit I/F 108 is used to receive reading image signals from the reading unit 11 (scanner engine) . The CPU 102 processes the image signals input from the reading unit I/F 109, and outputs the signals as recording image signals to the printing unit I/F 106.

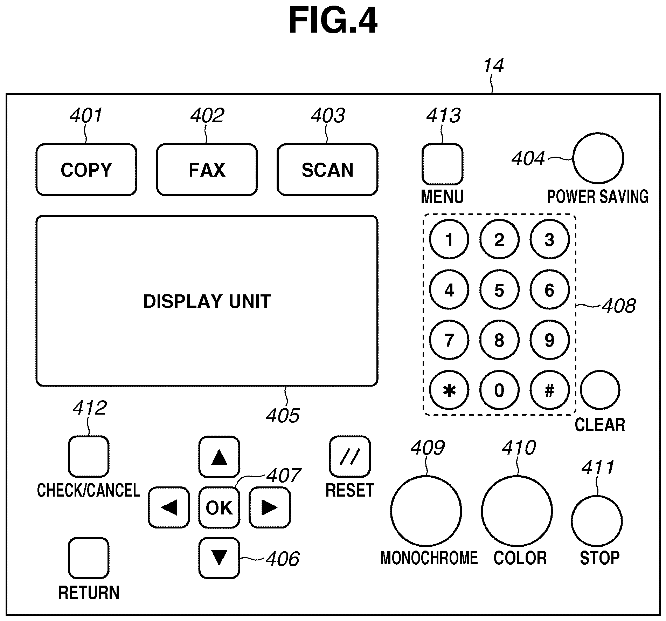

The CPU 102 displays characters and symbols on a display unit 405 of the operation panel 14 (see Fig. 4) using font information stored in a font area (font ROM) of the ROM 104, and receives instructions from a user through the operation panel 14.

The ROM 104 contains a data area (data ROM) storing information about the image forming apparatus 1, user telephone directory information, and department management information, for example. The information stored in the ROM 104 is read and updated by the CPU 102 as needed. The data area (data ROM) of the ROM 104 is rewritable.

The clock unit 125 is backed up by a primary battery (not illustrated), so that the image forming apparatus 1 counts date based on calendar information preset by a user. The information counted by the clock unit 125 is read and stored by the CPU 102 into predetermined areas in the RAM 103 and the ROM 104.

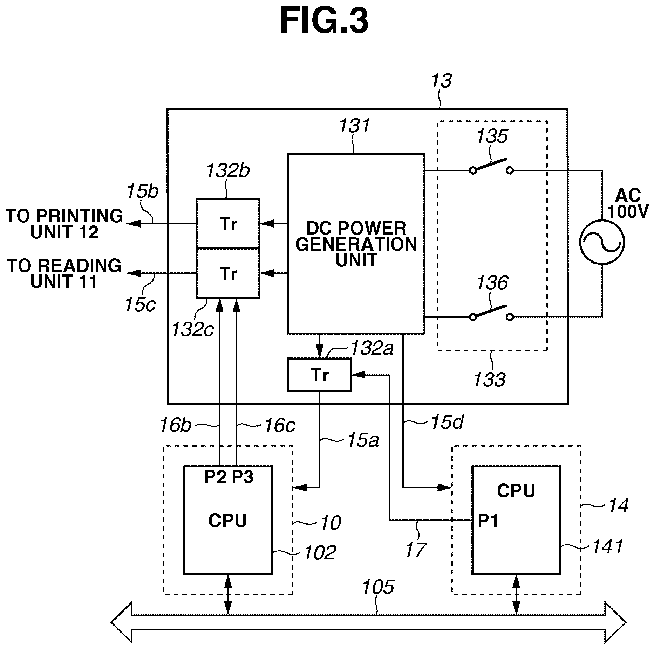

The power source unit 13 changes the power voltage 15 fed to the units, based on the control signal 16 connected to the output port of the CPU 102 and the control signal 17 connected to the output port of a later-described CPU 141 in the operation panel 14 (Fig. 3).

As illustrated in Fig. 3, the power source unit 13 includes a direct-current (DC) power generation unit 131, a transistor unit 132, and a power source switch 133. The DC power generation unit 131 rectifies and transforms a power supplied from a commercial power supply (AC 100 V), and feeds DC powers 15a, 15b, 15c, and 15d to the units (first to third blocks which are described later) in the image forming apparatus 1.

The transistor unit 132 comprises a Field-Effect Transistor (FET), for example. A transistor unit 132a controls on/off of supply of DC power 15a to be fed to the control unit 10, based on the control signal 17 output from the CPU 141. The control signal 17 is connected to an output port P1 of the CPU 141. Transistor units 132b and 132c respectively control on/off supply of DC powers 15b and 15c to be fed to the printing unit 12 and the reading unit 11, based on the control signals 16b and 16c from the CPU 102. The control signals 16b and 16c are respectively connected to output ports P2 and P3 of the CPU 102.

In other words, the transistor units 132b and 132c is a first switching unit for switching the power state between supply and stop as to the power supplied from the DC power generation unit 131 to the first block (i.e., the printing unit 12 and the reading unit 11), based on the signals from the CPU 102 in the control unit 10 (i.e., a first control chip) . The transistor unit 132a is a second switching unit for switching the power state between supply and stop as to the power supplied from the DC power generation unit 131 to the second block (i.e., the control unit 10), based on the signals from the CPU 141 in the operation panel 14 (i.e., a second control chip). The transistor unit 132 may be replaced with another device having the same function as the transistor unit 132.

A power switch 133 includes switches 135 and 136 therein. Connection and disconnection between the switches 135 and 136 is controlled by manual operation of a user. This connection/disconnection turns on/off the power switch 133. While the power switch 133 is turned on, power is supplied from the DC power generation unit 131 to the third block (i.e., the operation panel 14).

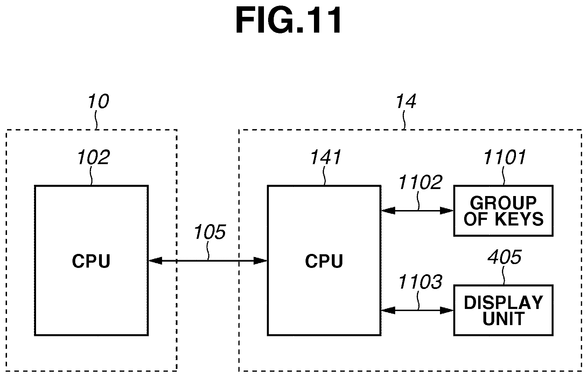

With reference to Figs. 4 and 11, the operation panel 14 of the image forming apparatus 1 is described in detail.

The image forming apparatus 1 of the present invention has a copy function provided by the reading unit 11 and the printing unit 12, and a scan function provided by the reading unit 11 and a Universal Serial Bus (USB) I/F 115. In addition, the image forming apparatus 1 has a facsimile function provided by the MODEM 111, and a print function to print images in response to instructions from the PC 117 through a USB 116 or a network 120.

The operation panel 14 is described. The operation panel 14 is provided with function keys (401 to 403) corresponding to the above functions. Press-down of one of the keys by a user leads to execution of the function corresponding to the pressed keys.

The display unit 405 displays setting information and state information about the image forming apparatus 1 to a user.

An arrow key 406 is used to move a cursor displayed on the display unit 405. The arrow key 406 has four buttons directed in upward, downward, right, and left directions (see Fig. 4). The arrow key 406 has an OK key 407 in the center functioning as a "determination key" for settings and inquiries. For example, when a user wants to change a copy setting (e.g., a sheet size), the user presses down the copy function button 401 to display a copy function screen, where the user selects an item to change (i.e., a sheet size) using the arrow key 406, and presses down the OK key 407. This operation calls a setting screen provided with selectable items . The user then moves the cursor on the setting screen using the arrow key 406 to the position of a setting which the user wants to select, and presses down the OK key 407 to select the setting.

A numeric keypad 408 is used to input the number of copies to be printed, and telephone number for the facsimile function, for example.

The copy, scan, and facsimile functions can be started by using a monochrome start key 409 or a color start key 410. In the present exemplary embodiment, the image forming apparatus 1 has a color copy function, and thereby the color start key 410 is provided to execute the color copy function. In an image forming apparatus having only monochrome reading function or monochrome print function, only the monochrome start key 409 may be provided. In an image forming apparatus having a function to determine whether a document is monochrome or color when reading the document, another start key other than the start keys 409 and 410 in Fig. 4 may be provided.

A stop key 411 is used to issue an instruction to stop the operation of each function. Meanwhile, as a tool for stopping an operation, a state check/cancel key 412 can be used by a user. A state check screen is used to check the currently running process on the image forming apparatus 1. The user can select a process to be stopped using the state check/cancel key 412 through the state check screen. In this case also, selection and determination are made using the arrow key 406 and the OK key 407.

A power saving key 404 is used to control a power state of the image forming apparatus 1. A user can switch the power state of the image forming apparatus 1 from a later-described normal mode to a power saving mode, or from the power saving mode to the normal mode, by pressing the power saving key 404.

A menu key 413 is used to make various settings of the image forming apparatus 1. When pressing down the menu key 413, a user can select a setting item from a list of various settings displayed on the display unit 304, using the arrow key 406 and the OK key 407, and make a setting using the numeral keypad 408, for example. Through such an operation, for example, a user can set mode transition time (Tsla and Tslb) when the image forming apparatus 1 shifts to the power saving mode, which will be described later.

The above key operations are detected by the CPU 141 in the operation panel 14. The CPU 141, when detecting a key operation, notifies the CPU 102 in the control unit 10 of the key operation. The CPU 102 in the control unit 10, when receiving the notification from the CPU 141 in the operation panel 14, identifies the pressed key according to the notification, and performs control corresponding to the key. For example, when power consumption of the image forming apparatus 1 is in the normal mode, if the power saving key 404 is pressed, the CPU 141 in the operation panel 14 detects the press down of the power saving key 404, and stores a flag indicating the press down of the power saving key 404 into a memory area in the CPU 141 in the operation panel 14. The CPU 141 in the operation panel 14 then notifies the CPU 102 in the control unit 10, of the key operation on the operation panel 14. The CPU 102 in the control unit 10, when receiving the notification from the CPU 141 in the operation panel 14, reads the detection flag for the key operation stored in the CPU 141 in the operation panel 14. When the read detection flag relates to an operation of the power saving key 404, power control is performed to switch the power consumption state of the image forming apparatus 1 from the normal mode to the power saving mode.

As illustrated in Fig. 11, the operation panel 14 is provided with a group of keys 1101 and a display unit 405. The group of keys 1101 includes the keys 401 to 404 and 406 to 413 illustrated in Fig. 4. A control signal 1102 is used when the CPU 141 detects a key operation performed by a user as described with Fig. 4. The control signal 1103 is used to display a screen on the display unit 405, and to supply power to the display unit 405. The display unit 405 includes a Liquid Crystal Display (LCD) and a back light (not illustrated).

For example, while the power consumption of the image forming apparatus 1 is in a normal mode, when the power saving key 404 is pressed to switch the normal mode to the power saving mode, the CPU 141 stops power supply to the display unit 405 based on a control signal 1103 transmitted from the CPU 102, because the display unit 405 is not to be used in the power saving mode. More specifically, in the power saving mode, power supply to the LCD of the operation panel 14 and the back light of the image forming apparatus 1 is stopped. However, in the power saving mode power is supplied to the CPU 141 in the operation panel 14 of the image forming apparatus 1.

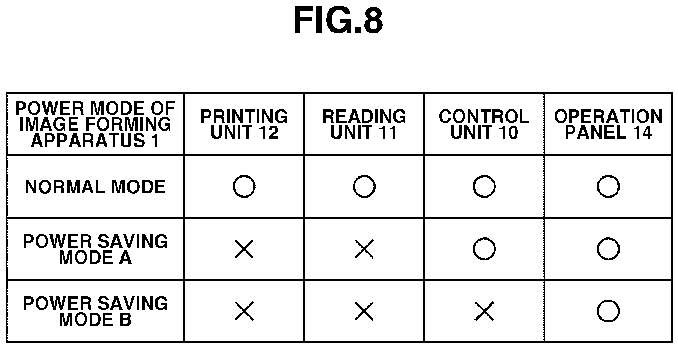

In Fig. 8, the marks (○, ×) indicate the states of power supply to the units in the power modes. The mark "○" indicates supply of the powers 15a, 15b, 15c, and 15d to the units from the DC power generation unit 131, and the mark "×" indicates non-supply thereof.

The power supply to the units is controlled based on signals transmitted through the output port P1 of the CPU 141 and the outputs port P2 and P3 of the CPU 102.

The image forming apparatus 1 shifts to the normal mode when the power switch 133 is turned on. The DC power generation unit 131 supplies power to the control unit 10, the printing unit 12, the reading unit 11, and the operation panel 14, so that a user can perform all operations of the image forming apparatus 1.

A power saving mode A (i.e., a first power saving mode) refers to a power consumption state which the image forming apparatus 1 in the normal mode shifts to when the power saving key 404 of the operation panel 14 is pressed down or when a predetermined power-saving-mode-A transition time (Tsla) has elapsed without any operation from a user. The transition time Tsla can be set in advance to a setting item on the display unit 405 that is displayed when a user presses the menu key 413 on the operation panel 14. When set, the transition time Tsla is stored in the ROM 104 and is readable by the CPU 102. In the power saving mode A, the image forming apparatus 1 consumes power less than in the normal mode.

In the power saving mode A, the DC power generation unit 131 supplies power to the control unit 10 and the operation panel 14, and does not supply power to the printing unit 12 and the reading unit 11. The control unit 10 switches the control signals 16b and 16c transmitted through the output ports P2 and P3 to control transistor units 132b and 132c, so that supply of the powers 15b and 15c from the DC power generation unit 131 to the printing unit 12 and the reading unit 11 is stopped.

In the power saving mode A, upon receipt of a notification from the CPU 102, the CPU 141 stops power supply to some parts of the operation panel 14, which are not used in the power saving mode A. For example, the operation panel 14 accepts an operation of the group of keys 1101 or at least one of the group of keys 1101 from a user, and thereby power is not supplied to the parts except the CPU 141 which detects the operation of the group of keys 1101. As a result, power supply to the display unit 405 (e.g., the LCD and the back light) can be stopped, leading to power saving in the operation panel 14.

In the power saving mode A, when a user performs one of the following operations (1) to (4), the CPU 102 detects the operation, and switches the control signals 16b and 16c transmitted through the output ports P2 and P3, so that the powers 15b and 15c are supplied to the printing unit 12 and the reading unit 11 respectively. This makes the image forming apparatus 1 reenter the normal mode.
(1) Press down of an operation key on the operation panel 14
(2) Input of an image signal from the network I/F 118
(3) Input of an image signal from the USB I/F 115
(4) Input of a facsimile incoming signal from the MODEM 111

A power saving mode B (i.e., a second power saving mode) refers to a power consumption state which the image forming apparatus 1 shifts to depending on a usage status of the USB I/F 115 and the network I/F 118 which will be described later.

For example, the image forming apparatus 1 shifts to the power saving mode B, when a predetermined power-saving-mode-B transition time (Tslb) has elapsed without detection of a communication between the USB I/F 115 or the network I/F 118 and the PC 117 after the image forming apparatus 1 shifts to the power saving mode A without any of operations (1) to (4). The transition time Tslb can be set in advance to a setting item on the display unit 405 that is displayed when a user presses the menu key 413 on the operation panel 14. When set, the transition time Tslb is stored in the ROM 104 and is readable by the CPU 102.

In the power saving mode B, the DC power generation unit 131 supplies power to the operation panel 14, and power is not supplied to the printing unit 12, the reading unit 11, and the control unit 10. The control unit 10 switches the control signals 16b and 16c transmitted through the output ports P2 and P3 to respectively control transistor units 132b and 132c, so that supply of the powers 15b and 15c from the DC power generation unit 131 to the printing unit 12 and the reading unit 11 is stopped. In addition, the CPU 141 in the operation panel 14 switches the control signal 17 output through the output port P1 to control the transistor unit 132a, so that supply of the power 15a from the DC power generation unit 131 to the control unit 10 is stopped.

In the power saving mode B, an operation of the group of keys 1101 on the operation panel 14 can be detected. For example, when an operation key on the operation panel 14 is pressed down, the CPU 141 in the operation panel 14 detects the operation, and switches the control signal 17 output through the output port P1. This makes the power 15a supplied to the control unit 10, and the image forming apparatus 1 reenters the power saving mode A from the power saving mode B. Alternatively, after the power 15a is supplied to the control unit 10, the image forming apparatus 1 may reenter the normal mode from the power saving mode A when the CPU 141 detects a press down of the operation key on the operation panel 14.

In the power saving mode B, since no power is supplied to the control unit 10, the image forming apparatus 1 does not return to the other modes, which are possible in power saving mode A, with respect to the following operations (2) to (4) that require a detection by the control unit 10. (2) Input of an image signal from the network I/F 118
(3) Input of an image signal from the USB I/F 115
(4) Input of a facsimile incoming signal from the MODEM 111

In the power saving mode B, since return to the other modes through the above operations is not admitted, power supply to the control unit 10 can be stopped, leading to reduction of power consumption in the image forming apparatus 1.

In the power saving mode B, however, to execute these operations, a user needs to move to the image forming apparatus 1 to press down an operation key on the operation panel 14 (or other specific key for returning to the power saving mode, or any keys a user can press down) . Accordingly, a user who wants to perform printing without moving away from the PC 117 is required to press down an operation key on the operation panel 14. This makes the image forming apparatus 1 less convenient than in the power saving mode A. However, a user who does not need printing from the PC 117 (e.g., a user who needs only copying), can actively shift to the power saving mode B to decrease power consumption more than in the power saving mode A, while keeping convenience of the image forming apparatus 1.

Even for a user who performs printing from the PC 117, if the user does not perform printing often, or if the user puts more value on the power saving in the image forming apparatus 1 than on the convenience of the apparatus 1 in the power saving mode A (in which the image forming apparatus 1 automatically reenters the normal mode from the power saving mode when making prints from the PC 117), the power saving mode B is useful.

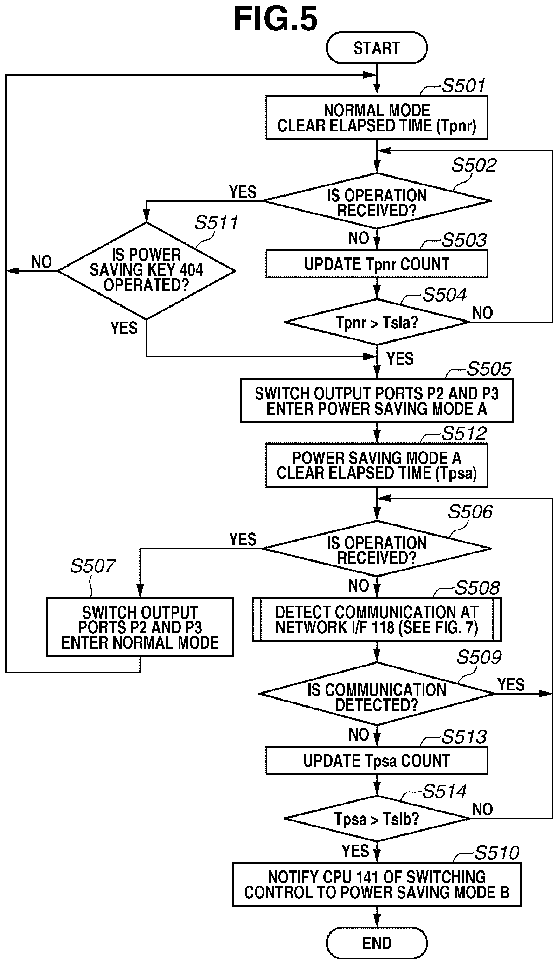

With reference to Figs. 5 to 7, power control of the image forming apparatus 1 is described. In the power control, the power consumption state of the image forming apparatus 1 is switched from the normal mode to the power saving mode A or the power saving mode B depending on a communication state between the image forming apparatus 1 and the PC 117 through the network I/F 118.

The process in the flowchart in Fig. 5 is performed by the CPU 102 in the control unit 10 based on a program stored in the ROM 104 in the control unit 10 (or a program loaded from the ROM 104 to the RAM 103).

In step S501, the CPU 102 initializes the value of the normal-mode elapsed time (Tpnr) which is stored in a data area of the ROM 104 to "0".

In step S502, the CPU 102 determines whether an operation is performed. The CPU 102 determines that an operation is performed by a user when a signal is input from the operation panel 14, the network I/F 118, the USB I/F 115, or the MODEM 111(Yes in step S502), and advances the process to step S511.

In step S511, the CPU 102 determines whether the operation detected in step S502 is an operation of the power saving key 404. When the CPU 102 determines that the operation is from the operation panel 14 and that the operation is a press down of the power saving key 404 based on communication with the CPU 141 in the operation panel 14 (Yes in step S511), the process goes to step S505.

When it is determined that the operation does not relate to the power saving key 404 (No in step S511), the CPU 102 performs an operation corresponding to the signal for the operation, and continues to operate in the normal mode. The process goes to step S501.

In step S502, the CPU 102 determines that no operation is performed by a user when no signal is input from the operation panel 14, the network I/F 118, the USB I/F 115, and the MODEM 111 (No in step S502), and in step S503, the CPU 102 updates the value of the elapsed time Tpnr stored in the ROM 104. The process goes to step S504.

In step S504, the CPU 102 compares the values of power-saving-mode-A transition time (Tsla) stored in the data area of the ROM 104 and the elapsed time Tpnr, to determine whether the elapsed time Tpnr is larger than the transition time Tsla (Tpnr > Tsla).

When the CPU 102 determines that the elapsed time Tpnr is not larger than the transition time Tsla (Tpnr ≤ Tsla) (No in step S504), the CPU 102 advances the process to step S502.

On the other hand, when the CPU 102 determines that the elapsed time Tpnr is larger than the transition time Tsla (Tpnr > Tsla) (Yes in step S504), the CPU 102 advances the process to step S505.

In step S505, the CPU 102 performs control to switch the output ports P2 and P3, so that supply of the powers 15b and 15c from the DC power generation unit 131 to the printing unit 12 and the reading unit 11 is stopped. As a result, the image forming apparatus 1 shifts to the power saving mode A from the normal power consumption state.

In step S512, the CPU 102 initializes the value of the power saving mode A elapsed time (Tpsa) stored in the data area of the ROM 104 to "0". In step S506, the CPU 102 determines whether an operation is performed. When a signal is input from the operation panel 14, the work I/F 118, the USB I/F 115, or the MODEM 111, the CPU 102 determines that an operation is performed by a user (Yes in step S506), and advances the process to step S507.

In step S507, the CPU 102 performs control to switch the output ports P2 and P3, so that the powers 15b and 15c from the DC power generation unit 131 are supplied to the printing unit 12 and the reading unit 11 respectively. As a result, the image forming apparatus 1 shifts to the normal mode from the power saving mode A.

When a signal is not input from the operation panel 14, the work I/F 118, the USB I/F 115, and the MODEM 111, the CPU 102 determines that no operation is performed (No in step S506), and in step S508, the CPU 102 detects a communication state of the network I/F 118.

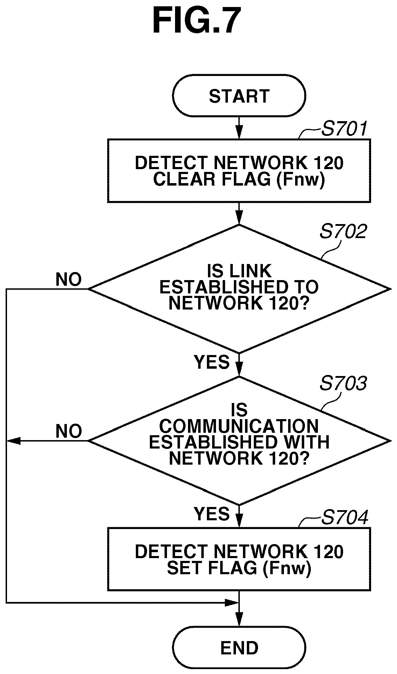

In step S508, when a communication with the network 120 is detected by the CPU 102, a network-120 detection flag (Fnw) stored in a data area of the ROM 104 is set (Fnw = "1") . The process in step S508 is described in detail in Fig. 7.

In step S509, the CPU 102 reads the network-120 detection flag (Fnw) from the data area of the ROM 104 as the detection result set in step S508, and determines whether a communication with the network 120 is detected.

When the detection flag Fnw is set (Fnw = "1"), the CPU 102 determines a communication with the network 120 is detected (Yes in step S509), and returns the process to step S506 to perform control to keep the image forming apparatus 1 in the power saving mode A.

When the detection flag Fnw is not set (Fnw = "0"), the CPU 102 determines a communication with the network 120 is not detected (No in step S509), and advances the process to step S513.

In step S513, the CPU 102 updates the elapsed time Tpsa stored in the ROM 104, and advances the process to step S514.

In step S514, the CPU 102 compares the values of the power-saving-mode-B transition time (Tslb) stored in the data area of the ROM 104 and the elapsed time Tpsa, to determine whether the elapsed time Tpsa is larger than the transition time Tslb (Tpsa > Tslb).

When the CPU 102 determines that the elapsed time Tpsa is not larger than the transition time Tslb (Tpsa ≤ Tslb) (No in step S514), the CPU 102 advances the process to step S506. On the other hand, when the CPU 102 determines that the elapsed time Tpsa is larger than the transition time Tslb (Tpsa > Tslb) (Yes in step S514), the CPU 102 advances the process to step S510.

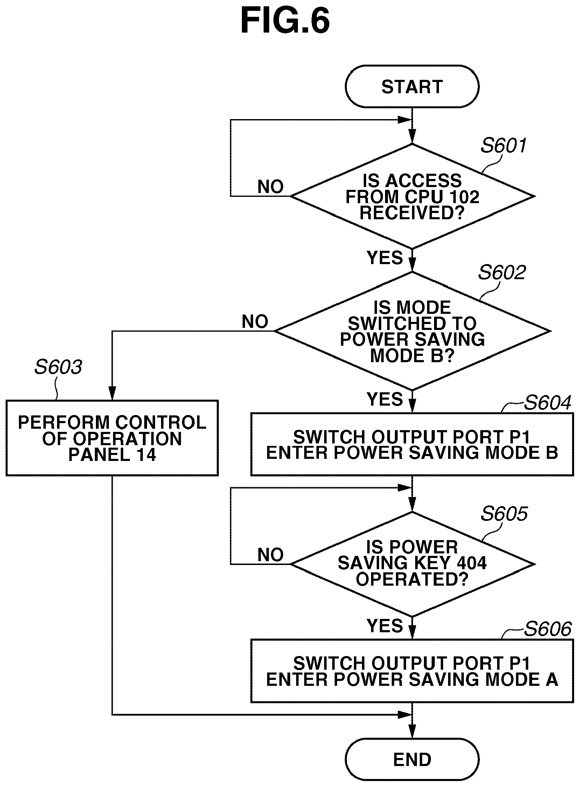

In step S510, the CPU 102 accesses the CPU 141 in the operation panel 14, and causes the CPU 141 to start transition control to the power saving mode B (in other words, the CPU 102 issues a transition instruction to the power saving mode B), and ends the process in the flowchart. In step S510, the CPU 141 in the operation panel 14 performs the process in Fig. 6 as described below.

The process in the flowchart in Fig. 6 corresponds to power control performed by the CPU 141 in the operation panel 14 based on a program stored in a ROM (not illustrated) in the operation panel 14 (or in a ROM (not illustrated) in the CPU 141) .

In the process, the power consumption state of the image forming apparatus 1 is switched to the power saving mode B when the CPU 141 stops power supply from DC power generation unit 131 to the control unit 10 upon the receipt of a notification of power control from the CPU 102 in the control unit 10 in step S510 in Fig. 5.

In step S601, the CPU 141 detects the notification from the CPU 102 in the control unit 10 (Yes in step S601), and advances the process to step S602. In step S602, the CPU 141 determines whether the notification from the CPU 102 in the control unit 10 instructs a transition to the power saving mode B.

When it is determined that the notification from the CPU 102 in the control unit 10 is not an instruction for transition to the power saving mode B (No in step S602), the CPU 141 advances the process to step S603. In step S603, the CPU 141 performs normal control of the operation panel 14 (e.g., display on the display unit 405 from the CPU 102 in the control unit 10) according to the control from the CPU 102 in the control unit 10, and ends the process in the flowchart.

When it is determined that the notification from the CPU 102 in the control unit 10 is an instruction for a transition to the power saving mode B (Yes in step S602), the CPU 141 advances the process to step S604. In step S604, the CPU 141 performs control to switch the output port P1, so that supply of the power 15a from the DC power generation unit 131 to the control unit 10 is stopped, and the control unit 10 is turned off. As a result, the image forming apparatus 1 shifts to the power saving mode B. In this process, in the operation panel 14, power is not supplied to the display unit 405 etc., but is supplied only to the part (i.e., the CPU 141) that requires the power supply to detect an operation of the group of keys 1101.

In step S605, when a press-down of the power saving key 404 (Yes in step S605) is detected, the CPU 141 advances the process to step S606. In step S606, the CPU 141 performs control to switch the output port P1, so that the power 15a is supplied from the DC power generation unit 131 to the control unit 10, and the control unit 10 is turned on. As a result, the image forming apparatus 1 shifts to the power saving mode A.

With reference to Fig. 7, a process to detect a communication state of the network I/F 118 is described.

In the process, the CPU 102 in the control unit 10 detects a communication state of the network I/F 118 in the image forming apparatus 1, and sets a network-120 detection flag (Fnw) so that the presence/absence of a communication with the network 120 can be determined in step S509 in Fig. 5.

The CPU 102 determines that no communication is detected from the network I/F 118 of the image forming apparatus 1 when the network 120 is not connected to the network I/F 118 or when the network 120 is connected to the network I/F 118 but no communication is detected therebetween, and the CPU 102 does not set a detection flag (Fnw = "0"). The CPU 102 determines that a communication is detected from the network I/F 118 of the image forming apparatus 1 when the network 120 is connected to the network I/F 118 and a communication is detected therebetween, and the CPU 102 sets a detection flag (Fnw = "1"), which is described in detail.

In step S701, the CPU 102 clears the network-120 detection flag (Fnw) stored in a data area of the ROM 104 (i.e., the detection flag Fnw is set to "0"), and advances the process to step S702.

In step S702, the CPU 102 detects a link state (i.e., the presence/absence of link pulse communication) between the network I/F 118 and the network 120, and determines the presence/absence of link therebetween.

When it is determined that there is no link between the network I/F 118 and the network 120 (i.e., no link pulse communication therebetween) (No in step S702), the CPU 102 does not set a detection flag for the network 120 (Fnw) (in other words, the flag Fnw remains to be "0"), and the ends the process in the flowchart.

When it is determined that there is a link (i.e., a link pulse communication is present therebetween) (Yes in step S702), the CPU 102 advances the process to step S703. In step S703, the CPU 102 detects a communication with the network 120 from the network I/F 118 (the presence/absence of a packet communication addressed to the image forming apparatus 1 from the network 120), to determine the presence/absence of a communication with the network 120.

When it is determined that there is no communication (no packet communication is present) (No in step S703), the CPU 102 does not set a detection flag for the network 120 (Fnw) (in other words, the flag Fnw remains to be "0"), and the ends the process in the flowchart.

When it is determined that there is a communication (a packet communication is present) (Yes in step S703), the CPU 102 advances the process to step S704. In step S704, the CPU 102 sets a detection flag for the network 120 (Fnw = "1") to store the detection flag in a data area of the ROM 104, and ends the process in the flowchart.

In the present exemplary embodiment, the image forming apparatus 1 has two modes, that is, the normal mode and the power saving mode A as the power consumption states other than the power saving mode B, but the image forming apparatus 1 may have any number of power consumption states other than the power saving mode B as long as the number is two or more. When the image forming apparatus 1 has three or more power consumption states, a change is possible according to the configuration of the image forming apparatus 1: for example, the number of the powers supplied from the power source unit 13 is increased, or the destinations of power supply from the image forming apparatus 1 are increased.

In the present exemplary embodiment, in the flowchart in Fig. 7, detection of a communication state of the network I/F 118 has been described, but a similar control may be performed to shift to the power saving mode B by detection of a communication state of the USB I/F 115. The detection of a communication state of the USB I/F 115 can be performed by detection of VBUS power voltage of a USB that is provided through the USB I/F 115, and detection of a communication from the PC 117 through the USB I/F 115. In other words, the process in step S701 in Fig. 7 is changed to clearing of a USB detection flag, the process in step S702 is changed to detection of VBUS power voltage of the USB, the process in step S703 is changed to detection of a communication with the PC 117, and the process in step S704 is changed to setting of the USB detection flag. Through these changes, a communication state of the USB I/F 115 can be detected in the process in Fig. 7.

In addition, in the present exemplary embodiment, the return from the power saving mode B to the normal mode is controlled using the power saving key 404 on the operation panel 14, but the return may be performed using other control circuits in the blocks of the control unit 10 that do not affect the power of the image forming apparatus 1.

For example, among the blocks in the control unit 10, the same power source as that for the operation panel is used to supply power from the power source unit 13 to the line I/F 112. In addition, a facsimile incoming signal output from the line I/F 112 is set to be detected by the CPU 141 instead of the CPU 102. These arrangements enables return of the image forming apparatus 1 to the normal mode also upon receipt of a facsimile incoming signal. In this case, the process in step S511 in Fig. 5 is changed to an operation of the power saving key 404, or detection of presence/absence of a communication at the line I/F 112.

Instead of the USB I/F 115, high-speed interface Thunderbolt (development code name: Light Peak) manufactured by Intel Corporation, an American company, may be used.

As described above, the image forming apparatus 1 shifts to a power consumption state (i.e., the power saving mode B) in which power supply to an external I/F that communicates with an external terminal such as a network and a USB and the control unit 10 is stopped. As a result, power consumption can be significantly reduced in the image forming apparatus 1.

Further, the image forming apparatus 1 shifts to the power saving mode B depending on usage status of the external I/F. Thus, the image forming apparatus 1 offers another power consumption states (i.e., the normal mode and the power saving mode A) for a user who frequently uses the external I/F. Consequently, reduction in power consumption in the image forming apparatus 1 can be achieved, while decrease in convenience of the apparatus 1 for a user is prevented.

Furthermore, the power supply to the control unit 10 is stopped when the image forming apparatus 1 shifts to the power saving mode B, which decreases power consumption in the image forming apparatus 1 in the power saving mode B.

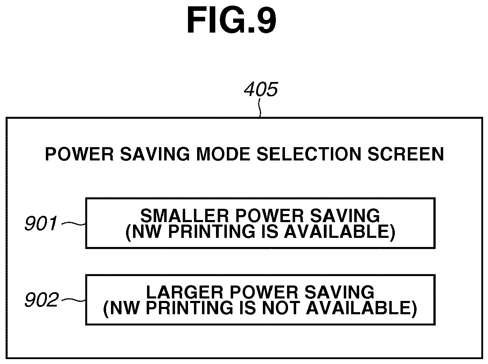

In the first exemplary embodiment, in the flowchart in Fig. 7, a usage status of the network I/F 118 by a user is determined based on detection of a communication at the network I/F 118. In contrast, in a second exemplary embodiment, a screen for selecting a power saving mode as illustrated in Fig. 9 is displayed on the display unit 405 of the operation panel 14, so that a user can select a power saving mode A or B to which the image forming apparatus 1 shifts. The selection screen also displays information indicating that printing using the network 120 is not available in the power saving mode B, so that the user can recognize the difference in usage at the time of shifting to the power saving mode B.

Fig. 9 illustrates a smaller power saving (NW printing is available) button 901. When the button 901 is pressed down by a user, the image forming apparatus 1 does not shift to the power saving mode B even if there is no operation from a user for a predetermined period of time (i.e., the transition time (Tsla) to the power saving mode B) but shifts to the power saving mode A, which is a setting in which printing using the network 120 is available (a first power saving mode setting).

Fig. 9 also illustrates a larger power saving (NW printing is not available) button 902. If the button 902 is pressed down by a user, the image forming apparatus 1 shifts to the power saving mode B after a predetermined period of time (i.e., the transition time (Tsla) to the power saving mode B) even without any operation from a user. This is a setting in which printing using the network 120 is not available (a second power saving mode setting).

In the second power saving mode, power supply to the control unit 10 is stopped, and thereby power consumption in the image forming apparatus 1 is suppressed more than in the first power saving mode in which power is supplied to the control unit 10. When either one of the buttons 901 and 902 is pressed on the power saving mode selection screen, information about the button selection (i.e., information indicating a selected power saving mode) is transmitted to the CPU 102 from the CPU 141 in the operation panel 14, and stored in a data area of the ROM 104.

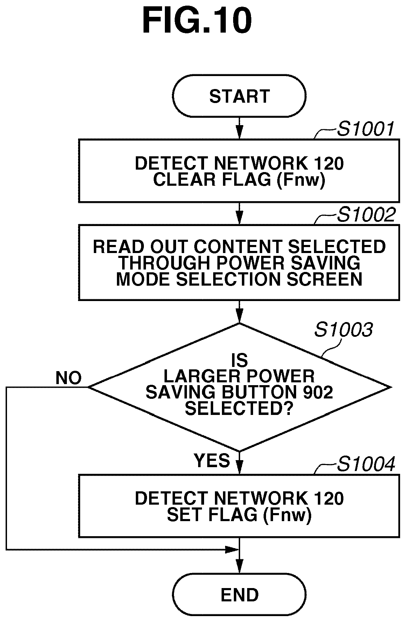

With reference to the flowchart in Fig. 10, a process performed in step S508 in Fig. 5 by the CPU 102 in the control unit 10 of the second exemplary embodiment is described. The process in the flowchart in Fig. 5 is performed by the CPU 102 in the control unit 10 based on a program stored in the ROM 104 of the control unit 10 (or a program loaded from the ROM 104 to the RAM 103).

In the process in Fig. 10, the setting selected by a user through the power saving mode selection screen of the operation panel 14 (see Fig. 9) is stored in a data area of the ROM 104 in advance, and the setting is read from the ROM 104, so that the CPU 102 determines whether to shift the image forming apparatus 1 to the power saving mode B. The process is described in detail.

In step S1001, the CPU 102 clears the network-120 detection flag (Fnw) stored in the data area of the ROM 104 (Fnw = "0"), and advances the process to step S1002.

In step S1002, the CPU 102 reads the setting from the ROM 104, which is selected by a user through the power saving mode selection screen of the operation panel 14 and stored in the data area of the ROM 104.

In step S1003, the CPU 102 determines whether the larger power saving (NW printing is not available) button 902 was selected and the second power saving mode is set through the power saving mode selection screen of the operation panel 14.

When it is determined that the smaller power saving (NW printing is available) button 901 was selected and the first power saving mode is set (No in step S1003), the CPU 102 does not reset the detection flag (Fnw) for the network 120 (i.e., Fnw remains to be "0"), and ends the process in the flowchart.

On the other hand, when it is determined that the larger power saving (NW printing is not available) button 902 was selected and the second power saving mode is set (Yes in step S1003), the CPU 102 advances the process to step S1004.

In step S1004, the CPU 102 resets the detection flag (Fnw) for the network 120 (Fnw = "1"), stores the detection flag (Fnw) in a data area of the ROM 104, and ends the process in the flowchart.

As described above, to reduce significantly power consumption in the image forming apparatus 1, a user can select the second power saving mode (i.e., the user presses the larger power saving (NW printing is not available) button 902). As a result, the image forming apparatus 1 shifts to a power saving mode (i.e., the power saving mode B) where power is not supplied to the control unit 10 including the external I/Fs (e.g., the network I/F 118 and the USB I/F 115) that communicate with an external terminal such as a network and a USB.

A user who frequently uses the external I/Fs can select the first power saving mode (i.e., the user presses the smaller power saving (NW printing is available) button 901). As a result, the image forming apparatus 1 shifts to a power saving mode (i.e., the power saving mode A) where power is supplied to the control unit 10 including external I/Fs that communicate with an external terminal such as a network and a USB.

As described above, when the image forming apparatus 1 is in the power saving mode A which saves more power than the normal power consumption state, it can be determined whether to shift the image forming apparatus 1 to the power saving mode B which saves more power than the power saving mode A, depending on a communication state of the image forming apparatus 1 with a network. In other words, when no communication is detected between the image forming apparatus 1 and a network, the image forming apparatus 1 does not likely use the network I/F 118 and the USB I/F 115 of the control unit 10. Thus, power supply to the control unit 10 is stopped to achieve further power saving in the image forming apparatus 1.

On the other hand, when a communication is detected between the image forming apparatus 1 and a network, the image forming apparatus 1 is likely to use the network I/F 118 and the USB I/F 115 of the control unit 10 to communicate with an external device. Thus, power is supplied to the network I/F 118 and the USB I/F 115 to enable communication with the external devices.

As described above, according to the present exemplary embodiment, the power mode selection results in significant reduction in power consumption in the image forming apparatus 1 through the simple mechanism that does not increase cost, while preventing decrease in convenience of the apparatus 1 for a user who uses an external I/F for communication with an external terminal such as a network and a USB.

In the above exemplary embodiments, an image forming apparatus has been described, but the present invention is also applicable to a server, a personal computer, and other electric devices having an external I/F. For example, the present invention is applicable to a Network Attached Storage (NAS).

The configuration and its content of the various data are not limited to those described above, but are formed in diverse ways depending on its intended application and purpose.

The exemplary embodiments of the present invention have been described, but the present invention can be embodied as a system, an apparatus, a method, a program, or a storage medium, for example. More specifically, the present invention is applicable to a system comprised of a plurality of devices, or to an apparatus comprised of a single device. The above exemplary embodiments can be combined in any manner, and the combinations will fall within the scope of the present invention.

### Other Embodiments

The present invention can be achieved by the following process. The process is performed by providing software (e.g., a program) to a system or an apparatus through a network or a storage medium to achieve the functions of the above exemplary embodiment, and by reading and executing the program by a computer (or a CPU or a Micro-Processing Unit (MPU)) of the system or the apparatus.

Aspects of the present invention can also be realized by a computer of a system or apparatus (or devices such as a CPU or MPU) that reads out and executes a program recorded on a memory device to perform the functions of the above-described embodiment (s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

A further embodiment not forming part of the present invention provides an image forming apparatus operating in a first power mode and a second power mode, the apparatus comprising: a communication means configured to communicate with an external apparatus: a control means configured to be communicably connected to the communication means to process data transmitted from the communication means; a power control means configured to control power supply to the communication means; and a setting means configured to set whether to permit the image forming apparatus to shift to the second power mode, wherein, while the image forming apparatus is in the first power mode where power is supplied to the control means and the communication means, the control means determines whether to shift the image forming apparatus to the second power mode, based on the content set by the setting means, and wherein the power control means performs control whether to shift the image forming apparatus to the second power mode, based on the determination made by the control means.

## Claims

1. An image forming apparatus (1) operable in a first power mode, a second power mode, and a third power mode, the apparatus comprising:
a control unit (10) configured to control an operation of the image forming apparatus and including a network interface (118) configured to communicate with an external apparatus;
a printing unit (12) configured to print image data;
a reading unit (11) configured to read a document;
an operation panel (14) configured to receive a user operation; and
a power control means (102, 141) configured to control power supply to the reading unit (11), the printing unit (12) and the control unit (10),
wherein the power control means is configured to shift a mode of the image forming apparatus from the first power mode, in which power is supplied to the control unit (10), printing unit (12) and reading unit (11), to the second power mode, in which power is supplied to the control unit (10) and power is not supplied to the printing unit (12) and reading unit (11), based on a first time period elapsing (S504, YES) without a user operation being received (S502) via the operation panel (14);
wherein the power control means is configured to shift a mode of the image forming apparatus from the second power mode to the third power mode, in which power is not supplied to the printing unit (12), reading unit (11), and control unit (10), based on a communication state of the network interface.

2. An image forming apparatus (1) according to claim 1 wherein the control unit (10) is configured to determine whether a communication between the network interface and the external apparatus is detected based on whether a packet addressed to the image forming apparatus (1) has been received at the network interface from the external apparatus.

3. An image forming apparatus (1) according to any of claims 1 and 2, wherein the network interface is a Universal Serial Bus (USB).

4. An image forming apparatus (1) according to any of claims 1 to 3, wherein the network interface is a LAN (35).

5. An image forming apparatus (1) according to any of claims 1 to 4, wherein the network interface is a modem.

6. A control method of an image forming apparatus (1) operable in a first power mode, a second power mode and a third power mode, the image forming apparatus comprising a control unit (10) configured to control an operation of the image forming apparatus and including a network interface (118) configured to communicate with an external apparatus; a printing unit (12) configured to print image data; a reading unit (11) configured to read a document; an operation panel (14) configured to receive a user operation; and a power control means (102, 141) configured to control power supply to the reading unit (11), the printing unit (12) and the control unit (10), the method comprising:
the power control means shifting a mode of the image forming apparatus from the first power mode, in which power is supplied to the control means (10), printing unit (12) and reading unit (11), to the second power mode, in which power is supplied to the control unit and power is not supplied to the printing unit (12) and reading unit (11), based on a first time period elapsing (S504, YES) without a user operation being received (S502) via the operation panel; and
the power control means shifting from the second power mode of the image forming apparatus to the third power mode, in which power is not supplied to the printing unit (12), reading unit (11) and control unit (10), based on a communication state of the network interface.

7. A computer program that, when executed by an image forming apparatus, causes the image forming apparatus to perform the method according to claim 6.

8. A computer-readable storage medium storing a program according to claim 7.

## Patentansprüche

1. Bilderzeugungsvorrichtung (1), die in einem ersten Leistungsmodus, einem zweiten Leistungsmodus und einem dritten Leistungsmodus betreibbar ist, wobei die Vorrichtung umfasst:
eine Steuereinheit (10), die konfiguriert ist, einen Betrieb der Bilderzeugungsvorrichtung zu steuern, und die eine Netzschnittstelle (118), die konfiguriert ist, mit einer externen Vorrichtung zu kommunizieren, enthält;
eine Druckeinheit (12), die konfiguriert ist, Bilddaten zu drucken;
eine Leseeinheit (11), die konfiguriert ist, ein Dokument zu lesen;
ein Bedienfeld (14), das konfiguriert ist, eine Benutzerbedienung zu empfangen; und
eine Energiesteuereinrichtung (102,141), die konfiguriert ist, Energiezufuhr zur Leseeinheit (11), zur Druckeinheit (12) und zur Steuereinheit (10) zu steuern,
wobei die Energiesteuereinrichtung konfiguriert ist, einen Modus der Bilderzeugungsvorrichtung vom ersten Leistungsmodus, in dem der Steuereinheit (10), der Druckeinheit (12) und der Leseeinheit (11) Energie zugeführt wird, in den zweiten Leistungsmodus, in dem der Steuereinheit (10) Energie zugeführt wird und der Druckeinheit (12) und der Leseeinheit (11) Energie nicht zugeführt wird, umzuschalten basierend auf einer ersten Zeitspanne, die verstreicht (S504, YES), ohne dass eine Benutzerbedienung über das Bedienfeld (14) empfangen wird (S502);
wobei die Energiesteuereinrichtung konfiguriert ist, einen Modus der Bilderzeugungsvorrichtung vom zweiten Leistungsmodus in den dritten Leistungsmodus, in dem der Druckeinheit (12), der Leseeinheit (11) und der Steuereinheit (10) Energie nicht zugeführt wird, umzuschalten basierend auf einem Kommunikationszustand der Netzschnittstelle.

2. Bilderzeugungsvorrichtung (1) nach Anspruch 1, wobei die Steuereinheit (10) konfiguriert ist zu bestimmen, ob eine Kommunikation zwischen der Netzschnittstelle und der externen Vorrichtung detektiert wird basierend darauf, ob ein an die Bilderzeugungsvorrichtung (1) adressiertes Paket von der externen Vorrichtung an der Netzschnittstelle empfangen worden ist.

3. Bilderzeugungsvorrichtung (1) nach einem der Ansprüche 1 und 2, wobei die Netzschnittstelle ein Universal Serial Bus (USB) ist.

4. Bilderzeugungsvorrichtung (1) nach einem der Ansprüche 1 bis 3, wobei die Netzschnittstelle ein LAN (35) ist.

5. Bilderzeugungsvorrichtung (1) nach einem der Ansprüche 1 bis 4, wobei die Netzschnittstelle ein Modem ist.

6. Steuerverfahren einer Bilderzeugungsvorrichtung (1), die in einem ersten Leistungsmodus, einem zweiten Leistungsmodus und einem dritten Leistungsmodus betreibbar ist, wobei die Bilderzeugungsvorrichtung eine Steuereinheit (10), die konfiguriert ist, einen Betrieb der Bilderzeugungsvorrichtung zu steuern, und die eine Netzschnittstelle (118), die konfiguriert ist, mit einer externen Vorrichtung zu kommunizieren, enthält; eine Druckeinheit (12), die konfiguriert ist, Bilddaten zu drucken; eine Leseeinheit (11), die konfiguriert ist, ein Dokument zu lesen; ein Bedienfeld (14), das konfiguriert ist, eine Benutzerbedienung zu empfangen; und eine Energiesteuereinrichtung (102,141), die konfiguriert ist, Energiezufuhr zur Leseeinheit (11), zur Druckeinheit (12) und zur Steuereinheit (10) zu steuern, umfasst; und wobei das Verfahren umfasst:
die Energiesteuereinrichtung schaltet, basierend auf einer ersten Zeitspanne, die verstreicht (S504, YES), ohne dass eine Benutzerbedienung über das Bedienfeld (14) empfangen wird (S502), einen Modus der Bilderzeugungsvorrichtung um, und zwar vom ersten Leistungsmodus, in dem der Steuereinheit (10), der Druckeinheit (12) und der Leseeinheit (11) Energie zugeführt wird, in den zweiten Leistungsmodus, in dem der Steuereinheit Energie zugeführt wird und der Druckeinheit (12) und der Leseeinheit (11) Energie nicht zugeführt wird; und
die Energiesteuereinrichtung schaltet, basierend auf einem Kommunikationszustand der Netzschnittstelle, vom zweiten Leistungsmodus der Bilderzeugungsvorrichtung in den dritten Leistungsmodus um, in dem der Druckeinheit (12), der Leseeinheit (11) und der Steuereinheit (10) Energie nicht zugeführt wird.

7. Computerprogramm, das bei Ausführen durch eine Bilderzeugungsvorrichtung die Bilderzeugungsvorrichtung veranlasst, das Verfahren nach Anspruch 6 durchzuführen.

8. Computerlesbares Speichermedium, das ein Programm nach Anspruch 7 speichert.

## Revendications

1. Appareil de formation d'image (1) pouvant être mis en œuvre dans un premier mode de puissance, un deuxième mode de puissance et troisième mode de puissance, l'appareil comprenant :
une unité de commande (10) configurée pour commander un fonctionnement de l'appareil de formation d'image et comprenant une interface réseau (118) configurée pour communiquer avec un appareil externe ;
une unité d'impression (12) configurée pour imprimer des données d'image ;
une unité de lecture (11) configurée pour lire un document ;
un panneau d'exploitation (14) configuré pour recevoir une opération d'utilisateur ; et
un moyen de commande de puissance (102, 141) configuré pour commander une délivrance de puissance à l'unité de lecture (11), à l'unité d'impression (12) et à l'unité de commande (10),
dans lequel le moyen de commande de puissance est configuré pour commuter un mode de l'appareil de formation d'image du premier mode de puissance, dans lequel de la puissance est délivrée à l'unité de commande (10), à l'unité d'impression (12) et à l'unité de lecture (11), au deuxième mode de puissance, dans lequel de la puissance est délivrée à l'unité de commande (10) et aucune puissance n'est délivrée à l'unité d'impression (12) ni à l'unité de lecture (11), sur la base d'une première période de temps s'écoulant (S504, OUI) sans réception (S502) d'une opération d'utilisateur par le biais du panneau d'exploitation (14) ;
dans lequel le moyen de commande de puissance est configuré pour commuter un mode de l'appareil de formation d'image du deuxième mode de puissance au troisième mode de puissance, dans lequel aucune puissance n'est délivrée à l'unité d'impression (12), à l'unité de lecture (11) ni à l'unité de commande (10), sur la base d'un état de communication de l'interface réseau.

2. Appareil de formation d'image (1) selon la revendication 1, dans lequel l'unité de commande (10) est configurée pour déterminer si une communication entre l'interface réseau et l'appareil externe est détectée sur la base du fait qu'un paquet adressé à l'appareil de formation d'image (1) a été, ou non, reçu au niveau de l'interface réseau en provenance de l'appareil externe.

3. Appareil de formation d'image (1) selon l'une quelconque des revendications 1 et 2, dans lequel l'interface réseau est un bus série universel (USB).

4. Appareil de formation d'image (1) selon l'une quelconque des revendications 1 à 3, dans lequel l'interface réseau est un LAN (35).

5. Appareil de formation d'image (1) selon l'une quelconque des revendications 1 à 4, dans lequel l'interface réseau est un modem.

6. Procédé de commande d'un appareil de formation d'image (1) pouvant être mis en œuvre dans un premier mode de puissance, un deuxième mode de puissance et un troisième mode de puissance, l'appareil de formation d'image comprenant une unité de commande (10) configurée pour commander un fonctionnement de l'appareil de formation d'image et comprenant une interface réseau (118) configurée pour communiquer avec un appareil externe ; une unité d'impression (12) configurée pour imprimer des données d'image ; une unité de lecture (11) configurée pour lire un document ; un panneau d'exploitation (14) configuré pour recevoir une opération d'utilisateur ; et un moyen de commande de puissance (102, 141) configuré pour commander une délivrance de puissance à l'unité de lecture (11), à l'unité d'impression (12) et à l'unité de commande (10), le procédé comprenant les étapes consistant à :
commuter, par le moyen de commande de puissance, un mode de l'appareil de formation d'image du premier mode de puissance, dans lequel de la puissance est délivrée au moyen de commande (10), à l'unité d'impression (12) et à l'unité de lecture (11), au deuxième mode de puissance, dans lequel de la puissance est délivrée à l'unité de commande et aucune puissance n'est délivrée à l'unité d'impression (12) ni à l'unité de lecture (11), sur la base d'une première période de temps s'écoulant (S504, OUI) sans réception (S502) d'une opération d'utilisateur par le biais du panneau d'exploitation ; et
commuter, par le moyen de commande de puissance, le deuxième mode de puissance de l'appareil de formation d'image au troisième mode de puissance, dans lequel aucune puissance n'est délivrée à l'unité d'impression (12), à l'unité de lecture (11) ni à l'unité de commande (10), sur la base d'un état de communication de l'interface réseau.

7. Programme informatique qui, lorsqu'il est exécuté par un appareil de formation d'image, amène l'appareil de formation d'image à mettre en œuvre le procédé selon la revendication 6.

8. Support d'informations lisible par ordinateur contenant en mémoire un programme selon la revendication 7.
